Europäisches Patentamt

(19) European Patent Office

Office européen des brevets

(11) Numéro de publication: **0 018 241**
**B1**

(12) **FASCICULE DE BREVET EUROPEEN**

(45) Date de publication du fascicule du brevet: **23.11.83**

(21) Numéro de dépôt: **80400309.3**

(22) Date de dépôt: **07.03.80**

(51) Int. Cl.³: **B 60 T 11/26**

---

(54) **Réservoir à liquide à deux compartiments.**

---

(30) Priorité: **13.04.79 IT 2185779**

(43) Date de publication de la demande:
**29.10.80 Bulletin 80/22**

(45) Mention de la délivrance du brevet:
**23.11.83 Bulletin 83/47**

(84) Etats contractants désignés:
**CH DE FR GB NL SE**

(56) Documents cités:
**EP - A - 0 003 201**
**FR - A - 2 287 369**
**FR - A - 2 407 103**
**GB - A - 1 403 376**

(73) Titulaire: **BENDITALIA S.p.A.**
**Via Cavalli 53/A**
**I-26013 Crema (IT)**

(72) Inventeur: **Cadeddu, Leonardo**
**Via Piacenza 29/0**
**I-26013 Crema (IT)**

(74) Mandataire: **Poidatz, Emmanuel et al,**
**Service Brevets Bendix 44 rue François 1er**
**F-75008 Paris (FR)**

Courier Press, Leamington Spa, England.

Réservoir à liquide à deux compartiments

Il est counu, notamment de EP—A—0 003 201 et FR—A—2 407 103, un réservoir de liquide à deux compartiments, notamment pour l'alimentation en fluide hydraulique de maître-cylindres, ce réservoir étant plus précisément composé de deux parties complémentaires superposées assemblées par collage, thermosoudage ou tout autre procédé analogue, une cloison médiane solidaire desdites parties et orientée transversalement par rapport à l'axe longitudinal du réservoir partageant l'intérieur de celui-ci en deux compartiments pourvus chacun d'un orifice de sortie, l'un au moins de ces compartiments possédant en outre un orifice de remplissage, et les deux compartiments communiquant entre eux par l'intermédiaire d'un canal de transfert qui pénètre dans chacun d'eux et qui court parallèlement au plan du niveau de liquide contenu dans le réservoir, ce canal de transfert se composant lui-même de deux portions complémentaires superposées, à savoir une portion inférieure en forme générale de gouttière et une portion supérieure solidaires respectivement de la partie inférieure et de la partie supérieure du réservoir, ces portions définissant ensemble un contour fermé et leur plan de jonction coincidant avec celui des parties constitutives du réservoir.

Le canal de transfert précité permet au fluide hydraulique de passer de l'un des compartiments du réservoir dans l'autre lorsque l'on procède à son remplissage en fluide hydraulique. Il doit être toutefois conçu de telle manière qu'une quantité suffisante de fluide soit retenue dans chacun desdits compartiments, lesquels sont respectivement reliés aux chambres du maître-cylindre double, lorsque le véhicule subit des accélérations ou décélérations élevées, ou encore lorsqu'il stationne sur un terrain en forte pente.

Afin de faciliter et de rendre plus économique la fabrication de tels réservoirs de liquide, la présente invention propose un perfectionnement au mode de construction rappelé ci-dessus, grâce auquel il est possible de réaliser avec les mêmes éléments constitutifs deux types de réservoir utilisables selon deux inclinaisons différentes du maître-cylindre associé et notamment selon une inclinaison nulle et selon une inclinaison définie par un angle "$\alpha$" par rapport à l'horizontale.

Ce but est atteint, conformément à la présente invention, grâce au fait que le plan de jonction des deux parties du réservoir forme avec le fond de chacune d'elles un angle "$\alpha/2$" égal à la moitié de l'angle d'inclinaison ci-dessus défini, que la partie inférieure du réservoir porte une portion inférieure de canal de transfert le long de chacune de ses deux parois latérales, le fond d'une de ces portions de canal prenant naissance au niveau du plan de jonction et à l'extrémité de moindre hauteur d'une paroi latérale et étant incliné d'un angle "$\alpha/2$" par rapport audit plan de jonction, le fond de l'autre portion de canal prenant lui aussi naissance au niveau de plan de jonction mais à l'extrémité de plus forte hauteur de l'autre paroi latérale et étant incliné en sens inverse du précédent d'un même angle "$\alpha/2$" par rapport audit plan de jonction, et que la partie supérieure du réservoir porte d'une part le long d'une seulement de ses deux parois latérales une portion supérieure de canal de transfert, dont la profondeur s'étend le long de la paroi, ladite portion supérieure du canal de transfert coopérant avec l'une ou l'autre desdites portions inférieures, selon la position relative des deux parties constitutives du réservoir, pour former un canal de transfert à section fermée débouchant à ses deux extrémités, et d'autre part le long de l'autre paroi latérale une seconde portion de canal, de profondeur inférieure, dont le plafond prend naissance au niveau du plan de jonction et est incliné par rapport à celui-ci d'un angle supérieur à $\alpha/2$, ladite portion de canal de transfert coopérant avec la seconde portion inférieure pour former un canal à section fermée à une extrémité et capable à l'autre extrémité de permettre l'échappement de l'air lors du remplissage en fluide.

Grâce à cette conception particulière des éléments constitutifs du réservoir, il devient en effet possible, ainsi qu'il sera expliqué plus en détails dans la description qui va suivre, de fabriquer deux types de réservoir correspondant à des angles d'inclinaison différents du maître-cylindre associé, ceci en retournant simplement avant l'assemblage l'une des parties constitutives du réservoir par rapport à l'autre.

Dans un mode de réalisation préférentiel de l'invention, les portions inférieures de canal de transfert sont constituées par des rainures de profondeur croissante ménagées dans des parties convenablement épaissies des parois latérales de la partie inférieure du réservoir, ces rainures ne communiquant avec l'intérieur du réservoir qu'au voisinage de leurs extrémités de plus grande profondeur. La portion supérieure du canal de transfert et la portion supérieure du canal d'échappement sont elles-mêmes constituées par deux rainures de hauteur croissante ménagées dans les parois latérales convenablement épaissies de la partie supérieure du réservoir, lesdites rainures ne communiquant elles aussi avec l'intérieur du réservoir qu'au voisinage de leurs extrémités de plus forte hauteur.

Dans un autre mode réalisation préférentiel de l'invention, les portions inférieures du canal de transfert sont constituées par des rainures de profondeur en partie croissante et en partie constante ménagées respectivement dans les parois latérales et transversales convenablement épaissies de la partie inférieure du réservoir, ces rainures ne communiquant avec l'intérieur du réservoir qu'au voisinage de leurs extrémités de plus grande profondeur.

La portion supérieure du canal de transfert est elle-même constituée par une rainure de profondeur en partie croissante et en partie constante ménagée respectivement dans une paroi latérale et dans les deux parois transversales convenablement épaissies de la partie supérieure du réservoir, cette rainure communiquant à ses deux extrémités avec les deux compartiments du réservoir; enfin la portion supérieure du canal d'échappement est constituée par une rainure de profondeur croissante ménagée dans l'autre paroi latérale convenablement épaissie du réservoir, cette rainure ne communiquant avec l'intérieur du réservoir qu'au voisinage de son extrémité du plus forte hauteur.

Les caractéristiques et avantages de l'invention apparaîtront plus clairement à la lecture de la description suivante de deux formes préférentielles de réalisation, donnée à simple titre d'exemple illustratif, et avec référence aux dessins ci-annexés, dans lesquels:

— la figure 1 représente en élévation latérale un premier type de réservoir à liquide à deux compartiments réalisé conformément à l'invention, et destiné à être monté sur un maître-cylindre horizontal;
— la figure 2 représente, également en élévation latérale, un second type de réservoir réalisé à partir des mêmes éléments que le précédent, mais destiné à être monté sur un maître-cylindre dont l'axe forme un angle ''α'' par rapport à l'horizontale; et
— la figure 3 représente en vue perspective éclatée les deux parties constitutives du réservoir de la figure 1 avant assemblage.

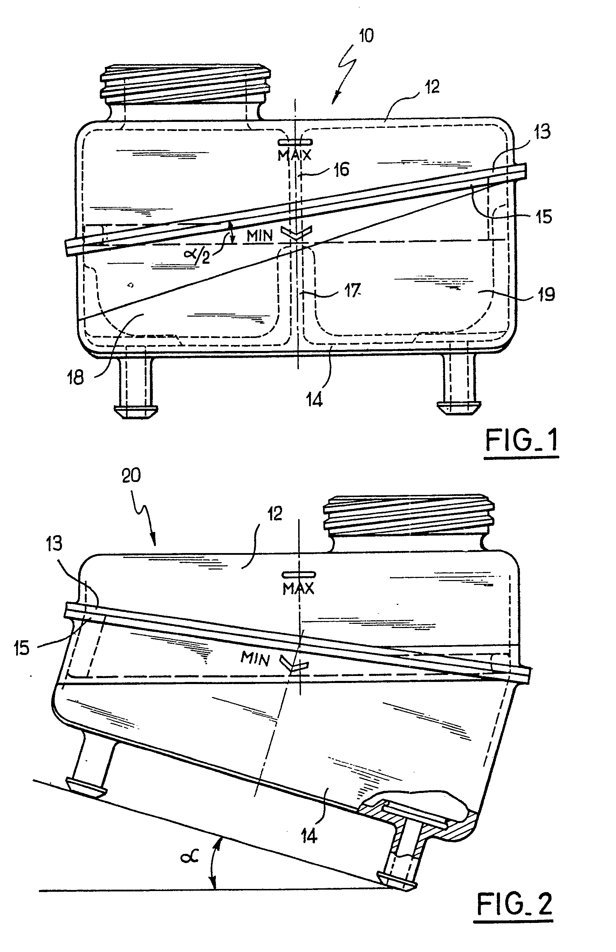

Considérant en premier lieu la figure 1 du dessin, on y voit représenté un réservoir à liquide à deux compartiments 10 destiné à l'équipement d'un maître-cylindre double à axe horizontal. Ce réservoir se compose deux parties complémentaires superposées 12 et 14, lesquelles sont réalisées par exemple en une matière thermoplastique, et sont assemblées par collage ou thermosoudage de leurs rebords respectifs 13 et 15. Les faces en regard de ces derniers définissent par conséquent le plan de jonction des deux parties constitutives du réservoir, et l'on voit sur la figure 1 que ce plan est incliné par rapport à l'horizontale d'un angle ''α/2''. Chacune des parties 12 et 14 comporte en outre un élément formant cloison médiane transversale 16 ou 17 dont la hauteur est limitée par le plan de jonction précédemment défini; ces deux éléments formant cloison sont solidarisés l'un avec l'autre lors de l'opération d'assemblage des deux parties du réservoir, donnant ainsi naissance à une cloison continue qui divise l'intérieur du réservoir en deux compartiments 18 et 19 pourvus chacun d'un orifice de sortie pour l'alimentation d'une des chambres du maître-cylindre. L'un de ces compartiments possède en outre un orifice servant au remplissage du réservoir en fluide hydraulique. La communication entre les deux compartiments 18 et 19 est assurée uniquement au moyen d'un canal de transfert à fond horizontal qui court le long d'une des parois latérales du réservoir, et dont la constitution sera décrite de façon plus détaillée ci-après. Comme rappelé dans l'introduction de la présente spécification, ce canal de transfert a pour rôle de permettre au fluide hydraulique de passer d'un compartiment du réservoir dans l'autre lors du remplissage de celui-ci, de s'opposer à un reflux excessif de fluide d'un compartiment à l'autre lors de brusques accélérations ou décélérations, ou encore, lorsque le véhicule stationne sur un terrain en forte pente.

Si l'on fait à présent pivoter de 180° dans un plan horizontal l'une par rapport à l'autre des parties constitutives du réservoir (lesquelles sont superposées et de largeur constante), et si l'on assemble ces deux parties l'une à l'autre dans cette nouvelle position relative, on obtient un nouveau type de réservoir 20 tel que celui représenté à la figure 2 des dessins, réservoir dont le fond et le dessus, au lieu d'être parallèles l'un à l'autre comme dans le cas de la figure 1, définissent entre eux un angle ''α'' double de l'angle d'inclinaison ''α/2'' de leur plan de jonction. On comprend aisément à l'examen du dessin que ce nouveau type de réservoir à liquide est approprié à l'alimentation d'un maître-cylindre double dont l'axe est luimême incliné d'un angle ''α'' sur l'horizontale, ceci toutefois à condition que le fond du canal de transfert reliant l'un à l'autre les deux compartiments soit, ici encore, horizontal.

Pour assurer l'horizontabilité du fond du canal de transfert dans un cas comme dans l'autre, l'invention prévoit de constituer ce canal de transfert par superposition de deux portions complémentaires venues de moulage avec respectivement la partie supérieure et la partie inférieure du réservoir, ces portions complémentaires du canal de transfert étant solidarisées l'une avec l'autre lors de l'opération d'assemblage du réservoir, et étant plus précisément formées de la manière ci-dessous décrite.

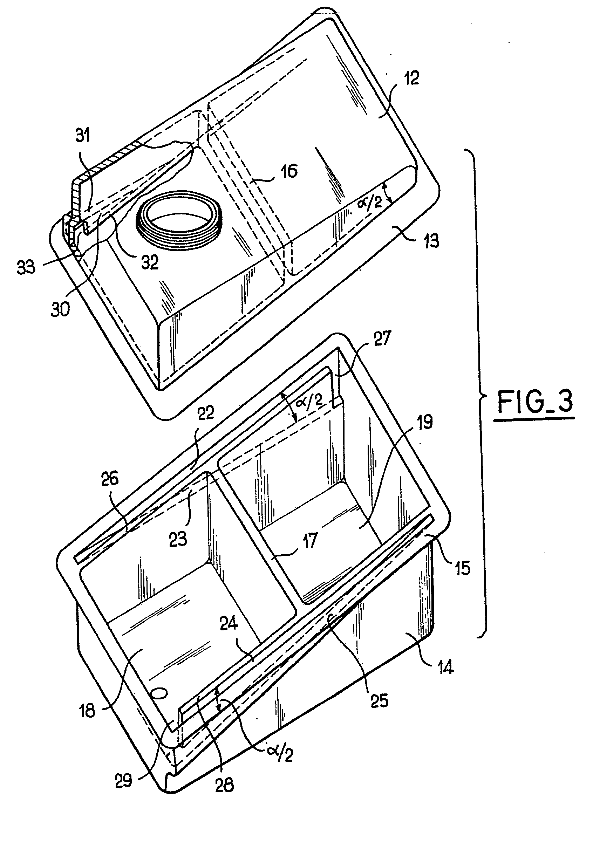

Comme le montre la figure 3 des dessins, la partie inférieure 14 du réservoir comporte, dans la partie haute convenablement épaissie à cet effet de chacune de ses parois latérales, une rainure 22 ou 24 pouvant jouer le rôle de portion inférieure de canal de transfert. Le fond 23 de la rainure 22 prend naissance au niveau du plan de jonction et à l'extrémité de mondre hauteur de la paroi latérale concernée, et il est incliné d'un angle ''α/2'' par rapport à ce plan de jonction, ce qui revient à dire qu'il court parallèlement au fond de la partie inférieure 14 du réservoir. Inversement, le fond 25 de l'autre rainure 24 prend naissance au niveau du plan de jonction mais à l'extrémité de plus forte hauteur de l'autre paroi latérale, et il est incliné en sens inverse, par rapport au fond 23, d'un même angle "α/2" par rapport à ce plan de jonction, ce qui revient à dire qu'il est incliné d'un angle "α" par rapport au fond de la partie inférieure 14 du réservoir. Les deux rainures 22 et 24 qui sont ainsi ménagées dans l'épaisseur des parties hautes des parois latérales correspondantes sont séparées de l'intérieur des compartiments 18 et 19 par des parois minces 26 et 28, respectivement, lesquelles s'arrêtent à courte distance de leurs extrémités opposées aux points de naissance des rainures correspondantes, ceci de manière à ménager respectivement un passage de communication 27 entre la rainure 22 et le compartiment 19, et un passage de communication 29 entre la rainure 24 et le compartiment 18. En variante, les parois 26 et 28 pourraient se prolonger sur toute la longueur des rainures en question et être percées au voisinage de leurs extrémités d'une ou de plusieurs ouvertures créant une solution de continuité dans leurs matière constitutive.

De l'autre côté, la partie supérieure 12 du réservoir comporte, dans la partie haute convenablement épaissie de l'une seulement de ses parois latérales, une rainure 30 jouant le rôle de portion supérieure de canal de transfert et dans la partie haute convenablement épaissie de l'autre paroi latérale une rainure de profondeur inférieure. Comme le montre la figure 3 des dessins, la rainure 30 s'étend le long de toute la paroi et est séparée de l'intérieur du réservoir par une paroi 32 qui s'arrête à courte distance de son extrémité de plus grande profondeur, ceci de manière à ménager un passage de communication 33 entre la rainure 30 et l'un des compartiments 18 ou 19, selon le cas. L'autre paroi latérale de la partie supérieure 12 du réservoir est pourvue d'une autre rainure dont le plafond prend naissance au niveau du plan de jonction et à l'extrémité de moindre hauteur de la paroi latérale, ce plafond étant incliné d'un angle supérieur à α/2 par rapport au plan de jonction ci-dessus décrit.

Cette rainure est séparée de l'intérieur du réservoir par une paroi mince qui s'arrête à courte distance de son extrémité de plus grande profondeur, ceci de manière à ménager un passage de communication entre la rainure et l'une compartiments 18 ou 19, selon le cas.

Si l'on assemble les deux parties du réservoir dans la position relative représentée à la figure 3, on voit immédiatement que la rainure 30 de la partie supérieure 12 et la rainure 22 de la partie inférieure 14 coopèrent pour former un canal de transfert à section fermée qui débouche par son extrémité 27 dans le compartiment 19.

Un tel canal de transfert a son fond 23 parallèle au fond de la partie inférieure 14 du réservoir, et convient par conséquent au mode de construction représenté à la figure 1 des dessins.

L'autre rainure 24 de la partie inférieure 14 et la rainure de la partie supérieure 12 coopèrent pour former un canal d'échappement à section fermée qui débouche au moyen des deux extrémités dans le compartiment 18. Un tel canal d'échappement présente son plafond incliné sur l'horizontale de telle manière que la partie la plus haute correspond à l'ouverture permettant ainsi l'échappement de l'air du canal lors du remplissage en fluide; l'extrémité opposée, au contraire, est aveuglée sur toute sa profondeur et de ce fait elle ne peut jouer aucun rôle de mise en communication des deux compartiments du réservoir.

Si l'on fait à présent pivoter de 180° dans un plan horizontal l'une des parties constitutives du réservoir avant de procéder à l'assemblage, on voit immédiatement que la rainure 30 de la partie supérieure 12 viendra coopérer avec la rainure 24 de la partie inférieure 14, donnant ainsi naissance à un canal de transfert dont le fond 25 sera incliné d'un angle "α" par rapport au fond du réservoir ainsi constitué, conformément au mode de construction illustré à la figure 2 des dessins, ce canal de transfert communiquant par son extrémité 33 avec le compartiment 19 et par son extrémité 29 avec le compartiment 18 du réservoir.

Dans ce cas comme dans le précédent, le fond du canal court ainsi dans un plan horizontal, c'est-à-dire parallèlement au niveau du liquide contenu dans le réservoir.

Inversement, la rainure 22 de la partie inférieure 14 et la rainure de la partie supérieure 12 coopèreront pour former le canal d'échappement à section fermée qui débouchera au moyen des deux extrémités dans le compartiment 19. Un tel canal d'échappement présente son plafond incliné sur l'horizontale de telle manière que la partie la plus haute correspond à l'ouverture permettant ainsi l'échappement de l'air du canal lors du remplissage en fluide; l'extrémité opposée au contraire est aveuglée sur toute sa profondeur et de ce fait, elle ne peut jouer aucun rôle de mise en communication des deux compartiments du réservoir.

Selon une variante non représentée, les rainures 22 et 24 sont prolongées dans l'épaisseur de la partie haute des parois transversales la plus haute et la plus basse, respectivement et sur la moitié de la longueur de ces parois, le fond des prolongements étant parallèle au fond du réservoir, les parois 26 et 28 s'arrêtant à courte distance de l'axe central des parois transversales.

Pour ce qui concerne la partie supérieure 12 du réservoir, la rainure 30 est prolongée également le long des deux parois transversales du réservoir, la paroi 32 s'arrêtant également à courte distance de l'axe central des parois transversales.

Cette variante trouvera son intérêt dans le cas où le réservoir doit également s'opposer à une reflux du fluide d'un compartiment vers l'autre lorsque le véhicule stationne sur un terrain en forte pente transversale par rapport au véhicule lui-même.

## Revendications

1. Réservoir à liquide (10) à deux compartiments (18, 19), notamment pour l'alimentation en fluide hydraulique de maître-cylindres doubles, composé de deux parties complémentaires (12, 14) superposées et assemblées par collage, thermosoudage ou autre procédé analogue, une cloison médiane (16, 17) solidaire desdites parties et orientée transversalement par rapport à l'axe longitudinal du réservoir partageant l'intérieur de celui-ci en deux compartiments (18, 19) pourvus chacun d'un orifice de sortie, l'un au moins de ces compartiments possédant en outre un orifice de remplissage, et les deux compartiments communiquant entre eux par l'intermédiaire d'un canal de transfert qui pénètre dans chacun d'eux en courant le long d'une des parois latérales du réservoir et parallèlement au plan du niveau de liquide contenu dans ce réservoir, ce canal de transfert se composant lui-même de deux portions complémentaires superposées, à savoir une portion inférieure en forme générale de gouttière et une portion supérieure solidaires respectivement de la partie inférieure (14) et de la partie supérieure (12) du réservoir, ces portions définissant ensemble un contour fermé et leur plan de jonction coincidant avec celui des parties constitutives du réservoir, caractérisé en ce que pour permettre de réaliser avec les mêmes éléments constitutifs (12, 14) deux types de réservoir utilisables selon deux inclinaisons différentes du maître-cylindre associé, et notamment selon une inclinaison nulle et selon une inclinaison définie par une angle ($\alpha$) par rapport à l'horizontale, le plan de jonction des deux parties (12, 14) du réservoir forme avec le fond de chacune d'elles un angle ($\alpha/2$) égal à la moitié de l'angle d'inclinaison ci-dessus défini, que la partie inférieure (14) du réservoir porte une portion inférieure de canal de transfert le long de chacune de ses deux parois latérales, le fond (23) d'une de ces portions de canal (22) prenant naissance au niveau du plan de jonction et à l'extrémité de moindre hauteur d'une paroi latérale et étant incliné d'un angle ($\alpha/2$) par rapport audit plan de jonction, le fond (25) de l'autre portion de canal (24) prenant lui aussi naissance au niveau du plan de jonction mais à l'extrémité de plus forte hauteur de l'autre paroi latérale et étant incliné en sens inverse du précédent d'un même angle ($\alpha/2$) par rapport audit plan de jonction, et que la partie supérieure (12) du réservoir porte le long d'une de ses deux parois latérales une portion supérieure (30) de canal de transfert dont la profondeur s'étend le long de toute la paroi, ladite portion supérieure du canal de transfert coopérant avec l'une ou avec l'autre desdites portions inférieures (22, 24) selon la position relative des deux parties constitutives du réservoir (12, 14) pour former un canal de transfert à section fermée débouchant à son extrémité, et le long de l'autre paroi latérale une seconde portion de canal, de profondeur inférieure, dont le plafond prend naissance au niveau du plan de jonction et est incliné par rapport à ce dernier d'un angle supérieur à $\alpha/2$, ladite portion de canal coopérant avec la seconde portion inférieure pour former un canal aveuglé a une extrémité et capable, à l'autre extrémité, de permettre l'échappement de l'air lors du remplissage en fluide.

2. Réservoir selon la revendication 1, caractérisé par le fait que les portions inférieures de canal de transfert sont constituées par des rainures (22, 24) de profondeur croissante ménagées dans les parties convenablement épaissies des parois latérales de la partie inférieure (14) du réservoir, ces rainures ne commiquant avec l'intérieur du réservoir qu'au voisinage de leurs extrémités de plus grande profondeur.

3. Réservoir selon l'une ou l'autre des revendications 1 et 2, caractérisé en ce que la portion supérieure du canal de transfert et la portion supérieure du canal d'échappement sont constituées elles-mêmes par des rainures (30) de hauteur croissante ménagées dans les parois latérales convenablement épaissies de la partie supérieure (12) du réservoir, ces rainures ne communiquant avec l'intérieur du réservoir qu'au voisinage de leurs extrémités de plus forte hauteur.

4. Réservoir selon l'une quelconque des revendications 1 à 3, caractérisé en ce que chaque portion inférieure (22, 24) de canal de transfert se prolonge le long de la moitié d'une des parois transversales du réservoir, le fond desdits prolongements étant parallèle au fond du réservoir et que l'une des portions supérieures (30) de canal de transfert se prolonge le long de la moitié des deux parois transversales du réservoir.

5. Réservoir selon l'une quelconque des revendications 1 à 4, caractérisé en ce qu'il est prévu au voisinage desdites extrémités des rainures une solution de continuité (27, 29) dans les parois (26, 28) qui séparent ces rainures (22, 24) de l'intérieur du réservoir.

## Patentansprüche

1. Flüssigkeitsbehälter (10) mit zwei Kammern (19, 19), insbesondere zur Versorgung von Zweikreis-Hauptbremszylindern mit Hydraulikflüssigkeit, mit zwei komplementären Teilen (12, 14), die übereinander angeordnet und durch Kleben, Wärmeschweißen oder ein anderes entsprechendes Verfahren zusammengefügt sind, einer zentralen Trennwand (16, 17), die mit den beiden Teilen einstückig ausgebildet ist und bezüglich der Längsachse des Flüssigkeitsbehälters in Querrichtung verläuft, wobei sie das Innere des Flüssigkeitsbehälters in zwei Kammern (18, 19) unterteilt, die jeweils mit einer Auslaßöffnung versehen sind, wobei mindestens eine dieser Kammern außerdem eine Füllöffnung aufweist und die beiden Kammern unter sich über einen Übertragungskanal verbunden sind, der in jede der beiden mündet, indem er entlang der Seitenwände des Flüssigkeitsbehälters und parallel zur Ebene des Niveaus der im Flüssigkeitsbehälter enthaltenen Flüssigkeit verläuft, wobei dieser Übertragungskanal sich seinerseits aus zwei übereinander angeordneten, komplementären Abschnitten zusammenzetzt, und zwar einem unteren Abschnitt in Form einer Rinne und einem oberen Abschnitt, die mit dem unteren Teil (14) bzw. dem oberen Teil (12) des Flüssigkeitsbehälters einstückig ausgebildet sind, wobei diese Abschnitte gemeinsam eine geschlossene Kontur bilden und ihre Verbindungsebene mit derjenigen der den Flüssigkeitsbehälter bildenden Teilen zusammenfällt, dadurch gekennzeichnet, daß, um mit den gleichen Bauelementen (12, 14) zwei Arten von Flüssigkeitsbehältern verwirklichen zu können, die bei unterschiedlicher Neigung des zugeordneten Hauptbremszylinders verwendbar sind, und zwar unter einer Nullneigung und einer durch einen Winkel ($\alpha$) bezüglich der Horizontalen definierten Neigung, die Verbindungsebene der beiden Teile (12, 14) des Flüssigkeitsbehälters mit dem Boden jeder der beiden einen Winkel ($\alpha/2$) einschließt, der gleich der Hälfte des oben definierten Neigungswinkels ist, daß der untere Teil (14) des Flüssigskeitsbehälters einen unteren Abschnitt des Übertragungskanals entlang jeder seiner beiden Seitenwände trägt, wobei der Boden (23) eines dieser Abschnitte des Übertragungskanals (22) auf Höhe der Verbindungsebene beginnt und am niedrigeren Ende einer Seitenwand beginnt und bezüglich dieser Verbindungsebene um einem Winkel ($\alpha/2$) geneigt ist, während der Boden (25) des anderen Abschnittes des Verbindungskanales (24) ebenfalls auf Höhe der Verbindungsebene, jedoch am höheren Ende der anderen Seitenwand beginnt und in entgegengesetztem Sinn um den gleichen Winkel ($\alpha/2$) bezüglich der Verbindungsebene geneigt ist, und daß der obere Teil (12) des Flüssigkeitsbehälters entlang einer seiner beiden Seitenwände einen oberen Abschnitt (30) des Übertragungskanales trägt, dessen Tiefe sich über die gesamte Länge der Seitenwand erstreckt, wobei der obere Abschnitt des Übertragungskanales mit dem einen oder anderen der besagten unteren Abschnitt (22, 24) entsprechend der relativen Lage der beiden den Flüssigkeitsbehälter (12, 14) bildenden Teile zusammenwirkt, um einen an seinem Ende mündenden Übertragungskanal von geschlossenem Querschnitt zu bilden, und entlang der anderen Seitenwand einen zweiten Kanalabschnitt geringerer Tiefe trägt, dessen Decke auf Höhe der Verbindungshöhe beginnt und bezüglich der letzteren um einem Winkel geneigt ist, der größer als $\alpha/2$ ist, wobei dieser Kanalabschnitt mit dem zweiten unteren Abschnitt zusammenwirkt, um einen Kanal zu bilden, der am einen Ende geschlossen ist und am anderen Ende das Entweichen von Luft beim Auffüllen von Flüssigkeit ermöglicht.

2. Flüssigkeitsbehälter nach Anspruch 1, dadurch gekennzeichnet, daß die unteren Abschnitte des Übertragungskanales von Nuten (22, 24) größer werdender Tiefe gebildet werden, die in den entsprechend verdickten Abschnitten der Seitenwände des unteren Teiles (14) des Flüssigkeitsbehälters eingearbeitet sind, wobei diese Nuten mit dem Inneren des Flüssigkeitsbehälters nur in Nähe ihrer Enden größer Tiefe in Verbindung stehen.

3. Flüssigkeitsbehälter nach Anspruch 1 oder 2, dadurch gekennzeichnet, daß der obere Abschnitt des Übertragungskanales und der obere Abschnitt des Ablaßkanales ihrerseits von Nuten (30) größer werdender Höhe gebildet werden, die in die entsprechend verdickten Seitenwände des oberen Teils (12) des Flüssigkeitsbehälters eingearbeitet sind, wobei diese Nuten mit dem Inneren des Flüssigkeitsbehälters nur in Nähe ihrer Enden größerer Höhe in Verbindung stehen.

4. Flüssigkeitsbehälter nach einem der Ansprüche 1 bis 3, dadurch gekennzeichnet, daß jeder untere Abschnitt (22, 24) des Übertragungskanals sich über die Hälfte einer der Querwände des Flüssigkeitsbehälters verlängert, wobei der Boden dieser Verlängerungen parallel zum Boden des Flüssigkeitsbehälters verläuft, und daß sich einer der oberen Abschnitte (30) des Übertragungskanals über die Hälfte der beiden Querwände des Flüssigkeitsbehälters verlängert.

5. Flüssigskeitsbehälter nach einem der Ansprüche 1 bis 4, dadurch gekennzeichnet, daß in Nähe der besagten Enden der Nuten eine Unterbrechung (27, 29) in den Wänden (26, 28) vorgesehen ist, die diese Nuten (22, 24) vom Inneren des Flüssigkeitsbehälters trennen.

**Claims**

1. A liquid reservoir (10) having two compartments (18, 19), in particular for supplying dual master-cylinders with hydraulic fluid, composed of two complementary parts (12, 14) superposed and assembled by sticking, heat soldering, or other similar methods, a median partition (16, 17) solid with said parts and oriented transversely to the longitudinal axis of the reservoir dividing the interior of the latter into two compartments (18, 19) each provided with an outlet orifice, one at least of these compartments possessing in addition a filling orifice, and the two compartments communicating with each other via a transfer channel which opens into each of them by running along one of the lateral walls of the reservoir and parallel to the plane of the level of liquid contained in this reservoir, this transfer channel itself being composed of two superposed complementary parts, namely a lower part in the general shape of a gutter and an upper part solid respectively with the lower part (14) and the upper part (12) of the reservoir, these parts together defining a closed contour and their junction plane coinciding with that of the constituent parts of the reservoir, characterized in that, to allow construction with the same constituent elements of two types of reservoir usable for two different inclinations of the associated master-cylinder, and particularly at a zero inclination and at an inclination defined by an angle ($\alpha$) with respect to the horizontal, the plane of junction of the two parts (12, 14) of the reservoir forms with the bottom of each of them an angle ($\alpha/2$) equal to half the angle of inclination defined above, that the lower part (14) of the reservoir bears a lower transfer-channel part along each of its two sidewalls, the bottom (23) of one of these channel parts (22) originating at the level of the junction plane and at the lower end of a sidewall and being inclined at an angle ($\alpha/2$) with respect to said junction plane, the bottom (25) of the other channel part (24) also originating at the level of the junction plane but at the higher end of the other sidewall and being inclined in the opposite direction to the preceding at the same angle ($\alpha/2$) with respect to said junction plane, and that the upper part (12) of the reservoir bears along one of its two sidewalls an upper transfer-channel part (30) whose depth extends along the whole wall, said upper part of the transfer channel cooperating with one or other of said lower parts according to the relative position of the two constituent parts of the reservoir so as to form a transfer channel of closed section opening at its ends, and along the other sidewall a second channel part, less deep whose roof originates at the level of the junction plane and is inclined with respect to this latter at an angle greater than $\alpha/2$, the said channel part cooperating with the second lower part to form a channel blind at one end and capable, at the other end, of allowing air to escape on filling with fluid.

2. A reservoir according to claim 1, characterized in that the lower transfer-channel parts are constituted by grooves (22, 24) of increasing depth provided in the suitably thickened sidewalls of the lower part (14) of the reservoir, these grooves communicating with the interior of the reservoir only in the vicinity of their deeper ends.

3. A reservoir according to either claim 1 or claim 2, characterized in that the upper part of the transfer channel and the upper part of the escape channel are themselves constituted by grooves (30) of increasing height provided in the suitably thickened sidewalls of the upper part (12) of the reservoir, these grooves communicating with the interior of the reservoir only in the vicinity of their higher ends.

4. A reservoir according to any of claims 1 to 3, characterized in that each lower part (22, 24) of the transfer channel is prolongated along one half of one of the transverse walls of the reservoir, the bottom of these prolongations being . parallel to the bottom of the reservoir, and that the one of the upper parts (30) of the transfer channel is prolongated along one half of the two transverse walls of the reservoir.

5. A reservoir according to any of claims 1 to 4, characterized in that in the vicinity of said ends of the grooves there is provided a gap (27, 29) in the walls (26, 28) which separate the grooves (22, 24) from the interior of the reservoir.

FIG_1

FIG_2

FIG_3